Europäisches Patentamt

European Patent Office

Office européen des brevets

(19)

(11) **EP 0 945 725 A1**

## (12) EUROPEAN PATENT APPLICATION
published in accordance with Art. 158(3) EPC

(43) Date of publication:
29.09.1999 Bulletin 1999/39

(21) Application number: 97946167.0

(22) Date of filing: 09.12.1997

(51) Int. Cl.$^6$: **G01N 29/22**

(86) International application number:
PCT/JP97/04519

(87) International publication number:
WO 98/26281 (18.06.1998 Gazette 1998/24)

(84) Designated Contracting States:
DE FR GB IT

(30) Priority: 10.12.1996 JP 32970296
12.02.1997 JP 2803397
12.02.1997 JP 2803497

(71) Applicant:
HITACHI CONSTRUCTION MACHINERY CO.,
LTD.
Chiyoda-ku Tokyo 100-0004 (JP)

(72) Inventor: **TAKISHITA, Yoshihiko**
**Ibaraki 315 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **ULTRASONIC TESTER AND SYSTEM FOR ITS MANAGEMENT**

(57) A ultrasonic inspection system management system that can drastically decrease the load on and cost of a ultrasonic inspection system. Each of ultrasonic inspection systems A1-An is made up of a probe 1 and a system main body 100, which is connected to a host computer C by a network bus NB. The host computer C has a data storage section M. Specimen data provided by the ultrasonic inspection systems A1-An is analyzed and determined by the host computer C and stored in the data storage section M. The host computer C diagnoses the ultrasonic inspection systems A1-An and keeps track of a symptom of degradation of the probe by a self-diagnosis program. Data of each probe 1 is stored in the data storage section M and each ultrasonic inspection system A1-An can read the data through the host computer C.

FIG. 2

1: PROBE
A1~ An: ULTRASONIC INSPECTION SYSTEMS

EP 0 945 725 A1

## Description

### TECHNICAL FIELD

This invention relates to a ultrasonic inspection system management system for storing various data pieces provided by each ultrasonic inspection system or performing required processing based on the data pieces.

### BACKGROUND ART

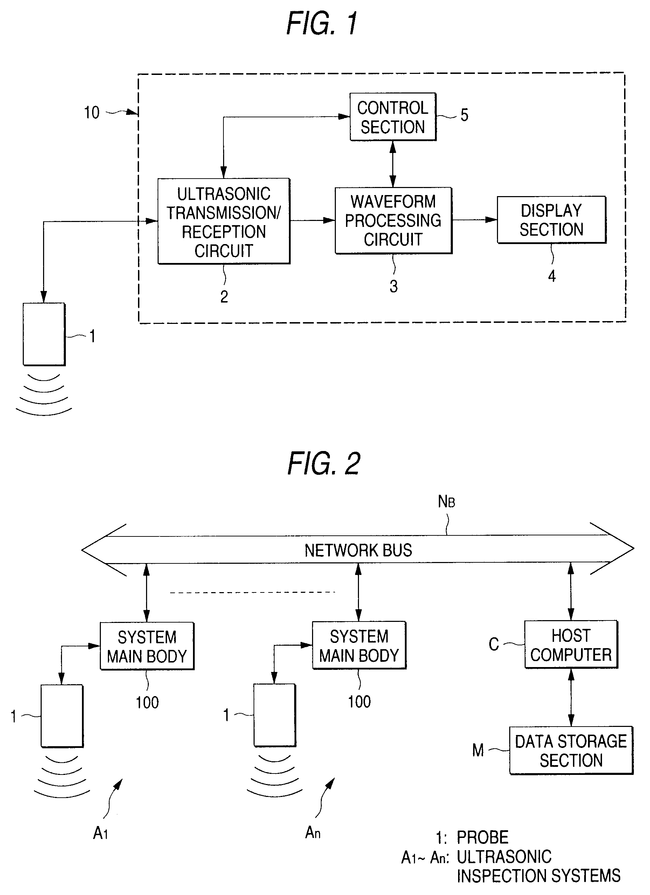

Non-destructive inspection systems using ultrasonics (ultrasonic inspection systems) are used in various fields of inspection of steel, metal, etc., to inspection of semiconductors in recent years. They are used in various departments as field inline inspection tools to research and development tools. They have various shapes of handy type portable by the inspector to installation type installed in the field. A representative system configuration is shown in FIG. 1.

FIG. 1 is a block diagram of a ultrasonic inspection system. A ultrasonic probe 1 (simply, probe) is a sensor section for transmitting and receiving ultrasonics. A ultrasonic transmission/reception circuit 2 (simply, transmission/reception circuit) is a circuit for transmitting and receiving ultrasonics to and from the probe 1. Normally, the transmission/reception circuit 2 excites a piezoelectric vibrator in the probe 2 by a high-pressure impulse signal for generating (transmitting) ultrasonics and amplifies a minute signal received at the piezoelectric vibrator to a predetermined voltage signal level by an amplifier. A waveform processing circuit 3 is a processing section for displaying the inspection result based on a received waveform. For example, the waveform processing circuit 3 takes out a part of the waveform by a gate circuit, extracts the maximum value, and compares the value with a predetermined determination level, thereby determining the inspection result. It also displays the extracted maximum values as light and dark values in order at predetermined positions of a display section 4, thereby forming a ultrasonic image. A control section 5 controls the transmission/reception circuit 2 and the waveform processing circuit 3. In recent years, a personal computer (PC) has often been used as the control section 5.

A ultrasonic inspection system of installation type comprises a transporter for moving the system, a scanner for changing the position of a probe or a sample, and the like in addition to the above-described members. Although one probe is used in the description, two probes are used in an inspection method with separate probes for transmission and reception (2-probe method). For a large specimen used on a steel line, etc., the number of probes may range from several tens to several hundreds.

In this case, generally the number of transmission/reception circuits is also increased in response to the number of probes. An array probe having an array of several ten to several hundred minute vibrators in one probe may be used.

In the related art described above, the waveform processing circuit 3 uses various signal processing software programs in response to specimens to analyze and determine ultrasonic reception signals. However, for large specimens used in fields of steel, etc., the number of probes may extend to several hundreds, in which case software for analyzing and determining ultrasonic reception signals and storing continuous data becomes enormous. Further, high-speed and large-capacity computer hardware of a CPU, memory, storage media, etc., becomes necessary to analyze and determine ultrasonic reception signals and store continuous data, largely pushing up the whole system costs. For example, even a comparatively small ultrasonic inspection system of handy type, etc., comprises ultrasonic reception signal analysis and determination means, thus can collect inspection data, but if an attempt is made to continuously store and manage data of the inspection results, etc., with the ultrasonic inspection system, a problem similar to that described above arises.

If trouble occurs in a ultrasonic inspection system, it must be repaired by an expert maintenance person. Upon reception of a notification of trouble occurrence, it is desired that an expert maintenance person asks the customer about the symptom of the trouble by telephone and narrows the trouble down to a few points. However, it is often impossible for the maintenance person to locate the failure portion of the system in such a hearing. Therefore, usually the maintenance person first goes to the installation place of the system, checks for the trouble symptom, once returns to the maintenance station, gets a complete set of replacement parts responsive to the symptom, again goes to the installation place of the system, and repairs the system. Thus, it takes much time and a large cost required for the maintenance person to repair the system.

Further, to perform a suitable inspection, a probe matching a specimen needs to be selected for use from among a large number of probes. By the way, the probes are easy to break, stocks of new probes are frequently replenished, and as the probes are used, their characteristics are degraded. Thus, to perform a suitable inspection, the user needs frequently to examine the characteristics of not only the new probes, but also the used probes and record the result; however, such examination and recording become a large burden for the user. Degradation of the characteristics also causes the trouble to occur in the system and it is desirable to predict degradation of the characteristics in its early stage, but the user is hard to predict such degradation.

The reason why probes are easily broken is as follows:

The following three ultrasonic inspection methods are available: Direct contact method, water immersion method, and local water immersion method. The direct contact method is a method of bringing a probe and a specimen into direct contact with each other via a contact medium, such as glycerin or machine oil, for inspecting a specimen while changing the position of the probe on the specimen manually or automatically. At this time, the probe is rubbed against the specimen. The water immersion method is a method of entering a specimen and a probe in a water tank and using water as a ultrasonic propagation medium therebetween. The local water immersion method is a method of immersing only the space between a specimen and a probe in water. In both the water immersion method and the local water immersion method, the probe is always in contact with water. Since the probe use environment is bad in either of the methods, the probe is often broken as it is used for a given term. To attach a probe to an automatic scanning mechanism, etc., for inspecting a specimen, an accident such that the probe collides with the specimen, etc., and is broken also often occurs. A vibrator for transmitting and receiving ultrasonics in a probe is made of a thin ceramic, etc., and thus is very vulnerable to mechanical vibration or shock. An accident also often occurs such that while a probe is being replaced or during manual inspection, the probe is dropped to the floor and is broken. Thus, the probes are handled as equivalents of consumables.

Further, since probes are handmade, the product quality varies from one probe to another and if the probes are used under the same condition, some are not broken and some are easily broken; they are broken in various manners. If a vibrator is broken due to the above-mentioned collision accident, ultrasonic reception signals disappear entirely; if a vibrator is broken gradually by exfoliation, etc., for example, as water enters, the ultrasonic reception signal level lowers gradually (degradation of characteristic as described above). In the former case, no signals are received, thus malfunction of the system is easily detected; in the latter case, an error in the probe is easily unrecognized for a certain term because of moderate change (difficulty to predict as described above).

It is an object of the invention to provide a ultrasonic inspection system and its management system that can solve the problems in the related art and drastically decrease the load on and cost of the ultrasonic inspection system.

DISCLOSURE OF THE INVENTION

To the end, the invention is characterized by the fact that a ultrasonic inspection system management system comprises one or more ultrasonic inspection systems each consisting of a probe and a system main body, a host computer, a transmission line for connecting the one or more ultrasonic inspection systems and the host computer, and a data storage section, wherein the host computer comprises data collection means for collecting data provided by the one or more ultrasonic inspection systems via the transmission line and storing the data in the data storage section.

The invention is characterized by the fact that in a ultrasonic inspection system comprising a probe and a system main body comprising a ultrasonic transmission/reception circuit for exciting the probe and receiving a signal therefrom, a waveform processing circuit for processing a signal from the ultrasonic transmission/reception circuit, and a control section for controlling the operation of the ultrasonic transmission/reception circuit and the waveform processing circuit, a ultrasonic inspection system diagnosis method comprises the steps of connecting the probe to the ultrasonic transmission/reception circuit, making the probe opposed to a test object, exciting the probe for outputting ultrasonics, collecting at least either of data output from the ultrasonic transmission/reception circuit and data output from the waveform processing circuit based on a reflected wave signal of the ultrasonics, disconnecting the probe from the ultrasonic transmission/reception circuit, collecting at least either of data output from the ultrasonic transmission/reception circuit and data output from the waveform processing circuit when a test signal is fed into the ultrasonic transmission/reception circuit, and diagnosing the ultrasonic inspection system based on the collected data.

The invention is characterized by the fact that in a ultrasonic inspection system comprising a probe and a system main body comprising a ultrasonic transmission/reception circuit for exciting the probe and receiving a signal therefrom, a waveform processing circuit for processing a signal from the ultrasonic transmission/reception circuit, and a control section for controlling the operation of the ultrasonic transmission/reception circuit and the waveform processing circuit, a ultrasonic inspection system diagnosis system comprises positioning means for making the probe opposed to a test object with the probe connected to the ultrasonic transmission/reception circuit, probe excitation means for exciting the probe with the probe opposed to the test object, first data collection means for collecting at least either of data output from the ultrasonic transmission/reception circuit and data output from the waveform processing circuit when the probe is excited by the probe excitation means, test signal output means for feeding a test signal into the ultrasonic transmission/reception circuit with the probe disconnected from the ultrasonic transmission/reception circuit, second data collection means for collecting at least either of data output from the ultrasonic transmission/reception circuit and data output from the waveform processing circuit when a test signal is output by the test signal output means, and determination means for determining whether or not an abnormality is contained in the ultrasonic inspection system based on the output data collected by the first data collection means and the second data collection means.

According to the invention, there is provided a ultrasonic inspection system having a ultrasonic probe data management function for transmitting and receiving ultrasonics with one selected from ultrasonic probes and inspecting a specimen based on a received ultrasonic signal, characterized by an external storage medium for storing general characteristic data of each of the ultrasonic probes.

According to the invention, there is provided a ultrasonic inspection system having a ultrasonic probe data management function for transmitting and receiving ultrasonics with one selected from ultrasonic probes and inspecting a specimen based on a received ultrasonic signal, characterized in that each of the ultrasonic probes is provided with a storage device for storing general characteristic data of the ultrasonic probe.

According to the invention, there is provided a ultrasonic inspection system having a ultrasonic probe data management function for transmitting and receiving ultrasonics with one selected from ultrasonic probes and inspecting a specimen based on a received ultrasonic signal, the system comprising a computer connected to one or more ultrasonic inspection systems by a transmission line, probe data collection means for collecting characteristic data of the ultrasonic probes contained in the computer, and a storage section for storing the characteristic data collected by the probe data collection means.

## BRIEF DESCRIPTION OF THE DRAWINGS

FIG. 1 is a block diagram of a conventional ultrasonic inspection system;
FIG. 2 is a block diagram of a management system of ultrasonic inspection systems according to a first embodiment of the invention;
FIG. 3 is a block diagram of a system main body shown in FIG. 2;
FIG. 4 is a flowchart to describe the host computer operation;
FIG. 5 is a flowchart to describe the host computer operation;
FIG. 6 is a table to show a probe data example;
FIG. 7 is a reception level change chart;
FIG. 8 is a flowchart to describe the host computer operation;
FIG. 9 is a chart to show transmission pulse voltage;
FIG. 10 is a table to show a data example of a transmission pulse circuit;
FIG. 11 is a block diagram of a ultrasonic inspection system containing a self-diagnosis section according to a second embodiment of the invention;
FIG. 12 is a block diagram of a ultrasonic inspection system comprising a ultrasonic probe data management function according to a third embodiment of the invention;
FIG. 13 is a table to show a probe data display example;
FIG. 14A and FIG. 14B are charts to show waveform examples of probe data; and
FIG. 15 is a block diagram of a ultrasonic inspection system comprising a ultrasonic probe data management function according to a fourth embodiment of the invention.

## BEST MODE FOR CARRYING OUT THE INVENTION

Referring now to the accompanying drawings, the invention will be discussed.

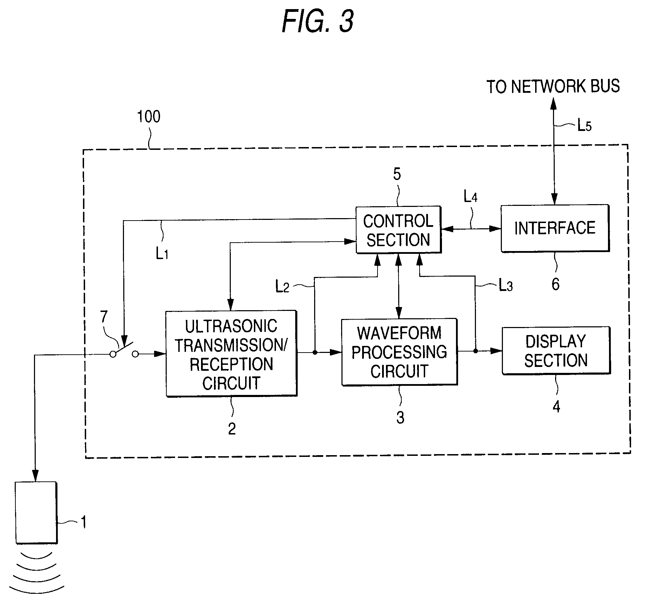

FIG. 2 is a block diagram of a management system of ultrasonic inspection systems according to a first embodiment of the invention. In the figure, A1, ... An denote a large number of ultrasonic inspection systems existing at different positions. Each of the ultrasonic inspection systems consists of a system main body 100 and a probe 1 connected thereto. The system main body 100 will be described later with reference to FIG. 3. C is a host computer and M is a data storage section into which various data pieces are written and from which various data pieces are read by the host computer C. NB is a network bus providing transmission lines over which the system main bodies 100 of the ultrasonic inspection systems A1-An and the host computer C communicate with each other. The network bus NB is a LAN (local area network) as a small-scale network bus or is a network using telephone lines, etc., such as the Internet, as a large-scale network bus. That is, if the ultrasonic inspection systems A1-An exist in a factory or a plant, a LAN is appropriate for the network bus NB; if the ultrasonic inspection systems A1-An are scattered at remote sites, the Internet is appropriate for the network bus NB.

FIG. 3 is a block diagram to show the configuration of the system main body 100 shown in FIG. 2. Parts identical with or equivalent to those previously described with reference to FIG. 1 are denoted by the same reference numerals in FIG. 3 and will not be discussed again. Numeral 6 is an interface existing between a control section 5 and the network bus NB and numeral 7 is a switch device provided between the probe 1 and a ultrasonic transmission/reception circuit 2.

L1 is a signal communication line for a control section 5 to control the operation of the switch device 7, L2 is a signal communication line for transmitting an output signal of the ultrasonic transmission/reception circuit 2 to the control section 5, L3 is a signal communication line for transmitting an output signal of a waveform processing circuit 3 to the control section 5, L4 is a signal communication line for transferring a signal between the control section 5 and the interface 6, and L5 is a signal communication line for connecting the interface 6 and the network bus NB. An operation program of the control section 5 of the embodiment comprises a program required for transferring data to and from the host computer C in addition to the operation program of the control section 5 in the related art.

Next, the operation of the embodiment will be discussed. The embodiment uses the network made up of the ultrasonic inspection systems A1-An, the network bus NB, the host computer C, and the data storage section M to perform (1) processing of data collected by the ultrasonic inspection systems A1-An, (2) failure diagnosis of the ultrasonic inspection systems A1-An, (3) probe management and diagnosis, and (4) management and diagnosis of the components making up the system main body. These topics will be discussed in order.

(1) Processing of data collected by ultrasonic inspection systems A1-An

Hitherto, the conventional ultrasonic inspection system has analyzed and determined the ultrasonic inspection result and stored data in the system main body. However, in the embodiment, the host computer C performs all or a part of the processing. If the host computer C performs all processing of analyzing and determining the ultrasonic inspection result and storing data, the control section 5 of each ultrasonic inspection system calls the host computer C through the interface 6 and the network bus NB and requests the host computer C to process data, then a ultrasonic inspection is performed on a specimen. Then, an output signal of the ultrasonic transmission/reception circuit 2 or the waveform processing circuit 3 is sent from the control section 5 through the interface 6 and the network bus NB to the host computer C.

The host computer C once stores the collected data in the data storage section M and analyzes and determines the ultrasonic inspection result based on the data. For example, the host computer C analyzes the ultrasonic string collected from the requesting ultrasonic inspection system, thereby determining whether or not the specimen inspected by the ultrasonic inspection system contains an internal defect and if an internal defect is found, determines the defect type, such as an internal cavity, a crack, or foreign matter, and if a large number of identical specimens are inspected, calculates defect percentage (for example, to inspect the junction faces of the specimens, percentage of the specimens having a peel defect on the junction face) and the like. Further, the host computer C also performs processing such as setting of a threshold value for determining whether or not the specimens are good based on the data.

On the other hand, if the host computer C performs a part of processing of analyzing and determining the ultrasonic inspection result and storing data, for example, when the system main body 100 is provided with analysis and determination functions, it analyzes and determines the ultrasonic inspection result and sends the result to the host computer C, which then stores the result in the data storage section M. This method is effective particularly if analysis and determination load on the ultrasonic inspection system is small, for example, if a small number of specimens are inspected in one inspection. However, even if the system main body 100 is provided with the analysis and determination functions, the host computer C may analyze and determine the ultrasonic inspection result, of course.

Since the host computer C thus collects the data provided by the ultrasonic inspection systems and analyzes and determines the ultrasonic inspection result based on the data in the embodiment, a CPU, memory, storage media, etc., of the control section 5 of each ultrasonic inspection system can be simplified and the ultrasonic inspection system costs can be reduced. Control software is changed or revised frequently. Also in this case, software of the host computer C needs only to be changed or revised and software of each ultrasonic inspection system need not be changed or revised, so that labor and time required for changing or revising the software can be decreased drastically. Further, the data, the determination results, etc., are stored in the data storage section M, thus the labor, time, and costs required for managing the data, etc., in the ultrasonic inspection system user can be eliminated. If the analysis and determination result data provided by the system main body 100 is stored through the host computer C in the data storage section M, the labor, time, and costs required for managing the data, etc., in the ultrasonic inspection system user can also be eliminated, as described above.

(2) Failure diagnosis of ultrasonic inspection systems A1-An

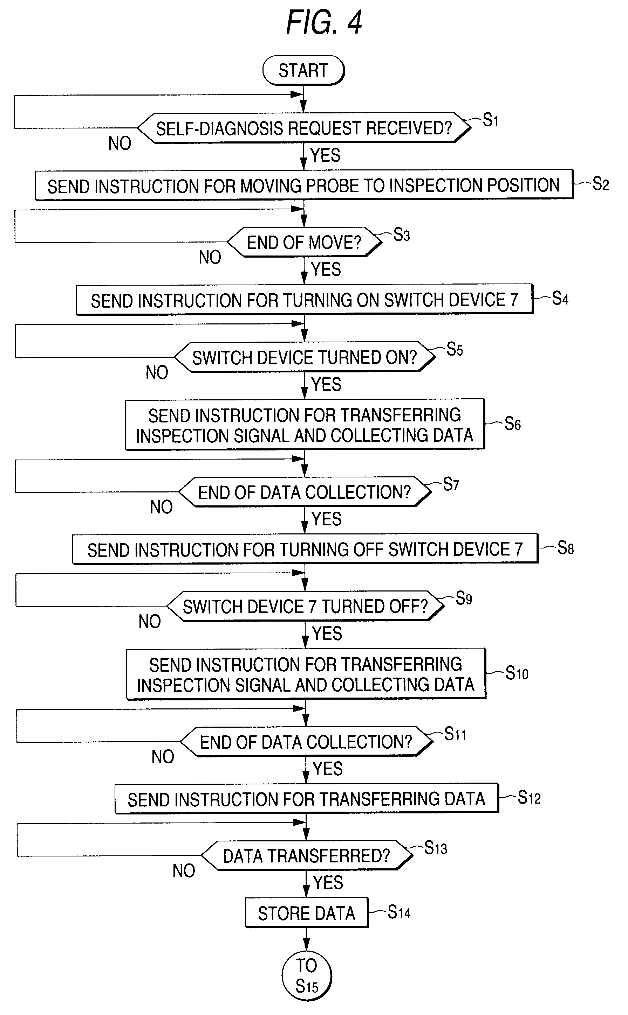

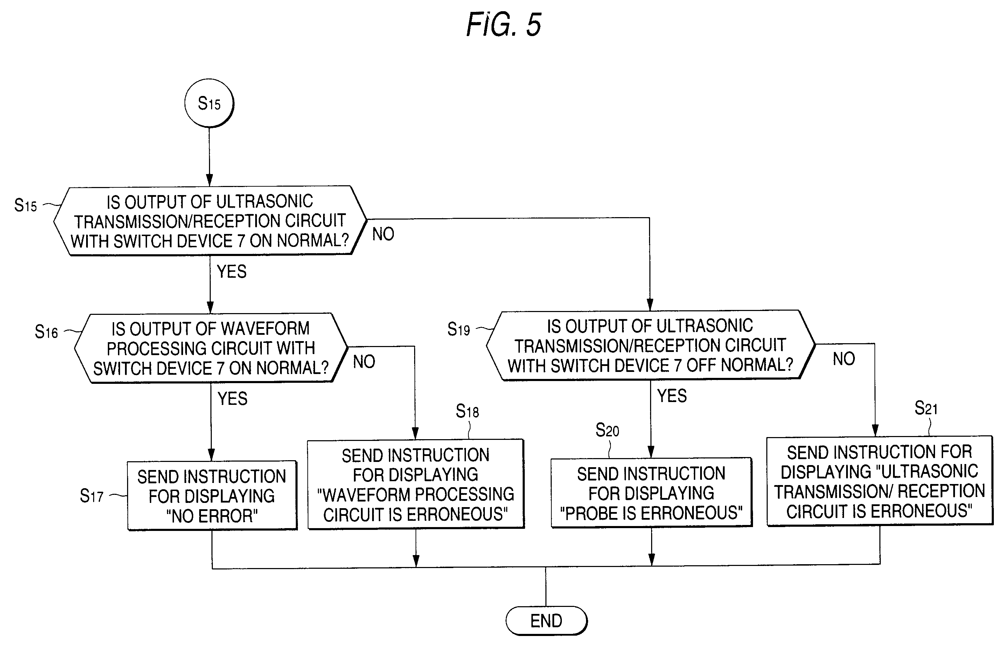

Formerly, when trouble occurred in a ultrasonic inspection system, a maintenance person went to the installation place of the ultrasonic inspection system and diagnosed the trouble, as described above. However, in the embodiment, the host computer C diagnoses ultrasonic inspection system problems. For this purpose, the host computer C is provided with a self-diagnosis program. The self-diagnosis operation of the host computer C will be discussed with flowcharts shown in FIG. 4 and FIG. 5.

The host computer C waits for reception of a self-diagnosis request at step S1 shown in FIG. 4.

If a self-diagnosis is required for a reason such that any ultrasonic inspection system arrives at periodic diagnosis time or that trouble occurs in any ultrasonic inspection system, the user of the ultrasonic inspection system selects SELF-DIAGNOSIS out of a menu displayed on the system main body 100. This selection is transmitted through the control section 5 of the ultrasonic inspection system, the interface 6, and the network bus NB to the host computer C, which then starts the diagnosis operation in response to the selection. First, the host computer C sends an instruction for moving the probe of the ultrasonic inspection system to an inspection (test) position to the ultrasonic inspection system at step S2 and waits until the probe is moved to the position at step S3. In response to the instruction, the control section 5 of the ultrasonic inspection system actuates the drive mechanism of the probe 1 for moving the probe 1 to a predetermined position. For example, if the ultrasonic inspection system enters a specimen in a water tank for inspection, the surface of a flat portion of the water tank is assumed to be a specimen and a position a predetermined distance from the surface is adopted as the predetermined position. When the probe 1 has been moved to the position, the control section 5 transmits a move termination signal to the host computer C.

When the host computer C acknowledges the move termination signal, it sends an instruction for turning on the switch device 7 to the ultrasonic inspection system at step S4, waits until the switch device 7 is turned on at step S5, sends an instruction for transferring inspection signal and collecting inspection data to the ultrasonic inspection system at step S6, and waits until data is collected at step S7. The control section 5 transmits signal to the ultrasonic transmission/reception circuit 2 with the switch device 7 closed. The ultrasonic transmission/reception circuit 2 causes ultrasonics to be generated from the probe 1, receives the reflected wave from the flat portion of the water tank, and outputs a signal responsive to the reflected wave. The waveform processing circuit 3 processes the signal from the ultrasonic transmission/reception circuit 2 and outputs a signal responsive to the processed signal. The control section 5 collects the signals output from the ultrasonic transmission/reception circuit 2 and the waveform processing circuit 3 via the signal communication lines L2 and L3 and at the termination of the collection, transmits a collection termination signal to the host computer C.

Upon reception of the collection termination signal, the host computer C instructs the control section 5 to turn off the switch device 7 at step S8 and waits until the switch device 7 is turned off at step S9. When the control section 5 turns off the switch device 7 over the signal communication line L1 and informs the host computer C that the switch 7 is turned off, the host computer C again sends an instruction for transferring inspection signal and collecting inspection data to the ultrasonic inspection system at step S10 and waits until data is collected at step S11. The control section 5 transmits signal to the ultrasonic transmission/reception circuit 2 with the switch device 7 off. In this case, the switch device 7 is off and the probe 1 is not connected to the system main body 100, thus the transmission pulse to the ultrasonic transmission/reception circuit 2 is used as a reception signal.

However, alternatively, a separate reference signal generation circuit may be provided so that an output signal thereof is used as a reception signal. In the state, the control section 5 collects the signals output from the ultrasonic transmission/reception circuit 2 and the waveform processing circuit 3 via the signal communication lines L2 and L3 and at the termination of the collection, transmits a collection termination signal to the host computer C. Upon reception of the collection termination signal, the host computer C sends an instruction for transferring the collected data to the ultrasonic inspection system at step S12 and waits for data transfer at step S13. Upon completion of data transfer from the control section 5, the host computer C stores the received data in the data storage section M at step S14.

Next, the host computer C carries out diagnosis based on the collected data. First, the host computer C reads the output data of the ultrasonic transmission/reception circuit 2 with the switch device 7 on (the probe 1 connected to the system main body) from the data storage section M and determines whether or not the data is valid at step S15 shown in FIG. 5 by comparing the data with the known output signal of the ultrasonic transmission/reception circuit 2 when the ultrasonic reflected wave from the flat portion of the water tank was received. If the data is valid, then the host computer C reads the output data of the waveform processing circuit 3 with the switch device 7 on (the probe 1 connected to the system main body) from the data storage section M and determines whether or not the data is valid at step S16 by comparing the data with a known valid waveform circuit output signal. If the data is valid, the host computer C instructs the control section 5 to display a "NO ERROR" message on the display section 4 at step S17. If the host computer C determines at step S16 that the data is not valid, it instructs the control section 5 to display a message of "WAVEFORM PROCESSING CIRCUIT 3 IS ERRONEOUS" on the display section 4 at step S18.

If the host computer C determines at step S15 that the data is not valid, it reads the output data of the ultrasonic transmission/reception circuit 2 when the switch device 7 was turned off from the data storage section M and determines whether or not the data is valid at step S19 by comparing the data with a known output signal from the ultrasonic transmission/reception circuit 2 when the ultrasonic transmission/reception circuit 2 received a transmission pulse. If the data is valid, the host computer C instructs the control section 5 to display a message of "PROBE 1 IS ERRONEOUS" on the display section 4 at step S20. If the host computer C determines at step S19 that the data is not valid, it instructs the control section 5 to display a message of "ULTRASONIC TRANSMISSION/RECEPTION CIRCUIT 2 IS ERRONEOUS" on the display section 4 at step S21. The diagnosis of the trouble in the ultrasonic inspection system making the diagnosis request is now complete.

In the description of the operation, the user of the ultrasonic inspection system A1-An selects "SELF-DIAGNOSIS," but the host computer C can also issue a "SELF-DIAGNOSIS" command.

In the description, the switch device 7 is provided for selectively placing the probe 1 in a connection or non-connection state. However, the switch device 7 is not necessarily required and the user may attach or detach the probe 1 to or from the system main body 100. In this case, the host computer C instructs the control section 5 to display a message on the display section 4, requesting the user to attach the probe 1 in place of displaying the message at step S4 and instructs the control section 5 to display a message on the display section 4, requesting the user to detach the probe 1 in place of displaying the message at step S8. Further, in the description of the operation, the failure diagnosis program is installed in the host computer C, but may be stored in the control section 5 of the system main body 100 for the system main body 100 to carry out diagnosis, and only the diagnosis result data may be transmitted to the host computer C and stored in the data storage section M.

In the embodiment, the host computer C collects the output signals of the ultrasonic transmission/reception circuit 2 and the waveform processing circuit 3 with the probe 1 transmitting ultrasonics and those with the probe 1 not involved, and diagnoses trouble of the ultrasonic inspection system based on the output signals. Thus, the maintenance person can locate the failure point without going to the installation place of the ultrasonic inspection system, so that the time to recovery of the faulty ultrasonic inspection system can be shortened drastically and in addition, the maintenance person labor and time can be decreased and the user needs only to make a diagnosis request and thus can save labor and time involved in the diagnosis. Diagnosis is carried out automatically and little requires labor, thus can be carried out frequently. The reliability of the system, in turn, the reliability of the inspection result can be improved by executing diagnosis. A failure history of each ultrasonic inspection system can be stored reliably.

Further, if the failure diagnosis program is installed in the system main body 100 and only the diagnosis result data is sent to the host computer and stored in the data storage section M, the failure point is known at the system main body 100 and thus the maintenance person can be informed of the failure point immediately, whereby labor of the maintenance person can be saved and the time to recovery from the failure can be shortened, as described above and a failure history need not be stored in the system main body 100, the storage section capacity of the system can be lessened and a failure history can also be stored reliably.

(3) Probe management and diagnosis

New probes are frequently replenished and as probes are used, their characteristics are degraded, as described above. Thus, preferably the user understands the characteristics of all probes. Here, various data pieces of probes will be discussed.

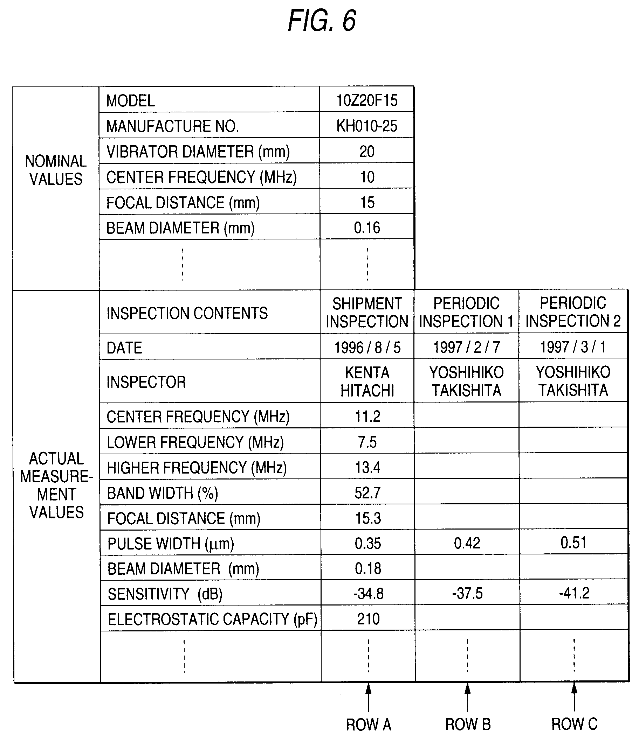

FIG. 6 is a table to show a probe data example. At the shipment time of a probe, the probe manufacturer writes the data into row A shown in FIG. 6 containing nominal value and actual measurement value columns. The nominal value column contains entries of vibrator diameter, center frequency, focal distance, etc., of the specifications required for ordering the probe including the model and the manufacture number. In the example shown in FIG. 6, beam diameter is entered in addition to the entries. The actual measurement value column stores shipment inspection data and contains entries of center frequency, upper limit frequency, lower limit frequency, band width, focal distance, sensitivity, electrostatic capacity, etc., including the date and the inspector. The pulse width and beam diameter used as resolution index of the probe are also described.

After the probe shipment, the probe is inspected as required or periodically by the inspector or each time the above-described self-diagnosis is carried out, and the actual measurement value rows of data increase accordingly. In the example shown in FIG. 6, two inspections are executed and the inspection results are written into rows B and C. In the inspection example, the probe is re-inspected for "PULSE WIDTH" and "SENSITIVITY" and it is understood from the digit change that the probe is damaged gradually. In the example shown in FIG. 6, the probe is inspected for "PULSE WIDTH" and "SENSITIVITY" by the inspectors. However, clearly, automatic measurement is also possible by inserting a measurement program during the self-diagnosis described above in (2).

In the embodiment, the characteristic data as shown in FIG. 6 is stored in the data storage section M for each of the probes of the users of the ultrasonic inspection systems A1-An. That is, when each user possesses a new probe, he or she transmits the characteristic data of the probe to the host computer C, which then stores the data in the data storage section M. Whenever the probe is inspected, actual measurement values are added to the stored data and are stored as shown in rows B and C in FIG. 6. The probe data is stored in a spreadsheet format used with PC software. When the user requires the characteristic data of the probe, he or she issues a request for transmitting the data of the probe to the host computer C via the network bus NB. In response to the request, the host computer C reads the data of the probe from the data storage section M and transmits the probe data via the network bus NB to the ultrasonic inspection system making the request.

Since the characteristic data of the probes of the ultrasonic inspection systems A1-An is thus stored in the data storage section M in the embodiment, the most recent data of the probes can be provided and an optimum probe for inspection of a specimen can be selected in a short time, whereby the inspection efficiency can be improved.

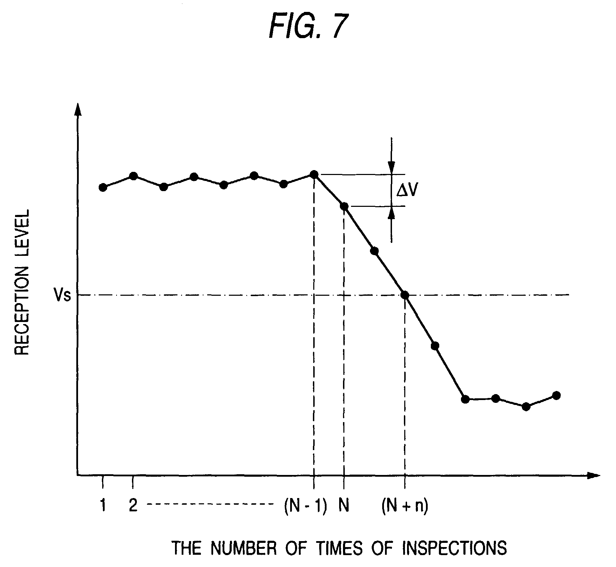

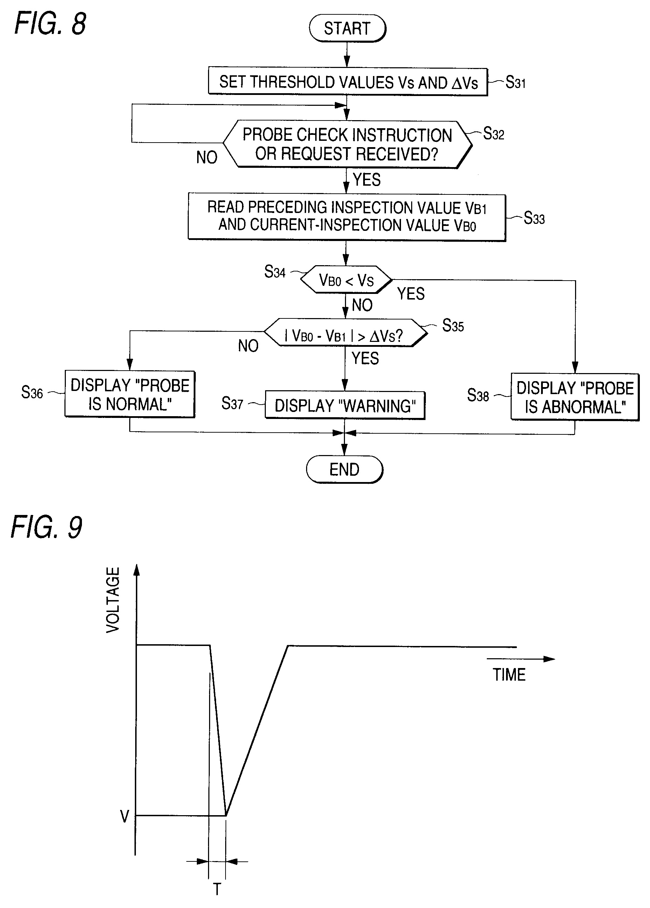

Further, the embodiment provides a function of determining whether or not a probe is normal and keeping track of a symptom of degradation of the probe. This function will be discussed with reference to FIG. 7, a characteristic diagram of reception level, and FIG. 8, a flowchart. In FIG. 7, the number of inspection times is entered on the horizontal axis and the reception level is entered on the vertical axis. Normally, to determine whether or not a probe is normal, a threshold value is set in the reception level and the actual reception level is compared with the threshold value. Value Vs shown in FIG. 7 denotes the threshold value. Value $\Delta V$ shown in FIG. 7 denotes the deviation between the preceding reception level and the current reception level, and threshold value $\Delta Vs$ is also provided for the reception level deviation. FIG. 7 shows the characteristic of the probe wherein the reception level is held almost constant until the number of inspections, (N-1), but lowers rapidly on and after the number of inspections, (N), and falls below the threshold value $\Delta Vs$ when the number of inspections, (N+n), is reached. The embodiment uses the threshold values Vs and $\Delta Vs$ to determine whether or not each probe is normal and keep track of a symptom of degradation of the probe.

Next, the operation of the host computer C for carrying out failure diagnosis of a probe and keeping track of a symptom of degradation of the probe will be discussed along the flowchart shown in FIG. 8. In the embodiment, threshold values Vs and $\Delta Vs$ are preset at step S31 shown in FIG. 8. For example, if a probe check instruction is set in the failure diagnosis program described above in (2), the host computer C waits for the instruction or waits for a probe check request made by an inspector at step S32. Upon reception of the instruction or the request, the host computer C reads the reception level in the preceding inspection (output value of the ultrasonic transmission/reception circuit when the switch device 7 is on), VB1, and the current reception level VB0 at step S33 and first compares the current reception level VB0 with the threshold value Vs at step S34. To execute the probe check as requested by the inspector, the value VB1 becomes the preceding preceding value and the value VB0 becomes the preceding value.

If the current reception level VB0 is equal to or greater than the threshold value Vs as the comparison result at step S34, whether or not the absolute value of the difference between the preceding reception level VB1 and the current reception level VB0 is greater than the threshold value $\Delta Vs$ is determined at step S35. If the absolute value of the difference is equal to or less than the threshold value $\Delta Vs$, an instruction for displaying a message of "PROBE IS NORMAL" is issued at step S36. If the absolute value of the difference exceeds the threshold value $\Delta Vs$, an instruction for displaying a message of "WARNING" is issued at step S37. That is, the current reception level VB0 is equal to or greater than the threshold value Vs and the probe may be used, but the current reception level lowers more than the threshold value Vs as compared with the preceding reception level, thus this is determined to be a symptom of degradation of the probe and a warning is given. If it is determined at step S34 that the current reception level VB0 is less than the threshold value Vs, clearly the probe is abnormal, thus an instruction for displaying a message of "PROBE IS ABNORMAL" is issued at step S38.

Thus, in the embodiment, the threshold values Vs and $\Delta Vs$ are set, the current reception level VB0 is compared with the threshold value Vs, and the absolute value of the difference between the preceding reception level VB1 and the current reception level VB0 is compared with the threshold value $\Delta Vs$, so that a symptom of degradation of the probe can be known in addition to knowing whether or not the probe is normal. If a symptom of degradation of the probe can be thus known, a probe to replace is purchased, self-diagnosis intervals are shortened for caution, or any other measure can be taken; even when degradation of the probe develops and the probe becomes unable to be used, the user can deal with the problem promptly.

In the description, determinations as to whether or not the probe is normal and as to a symptom of degradation of the probe are made using the current reception level VB0 and the preceding reception level VB1. However, average data provided by a number of past inspections can also be compared with the threshold value for determining whether or not the probe is normal or the change rate (derivative value) of the current reception level to the preceding reception level can also be compared with the threshold value for determining a symptom of degradation of the probe. In the description, determinations as to whether or not a given probe is normal and as to a symptom of degradation of the probe are made, but can also be made separately. Clearly, the means for keeping track of a symptom of probe degradation can also be applied to the components other than the probe (ultrasonic transmission/reception circuit, waveform processing circuit). Further, in the description, the program for making determinations as to whether or not a given probe is normal and as to a symptom of degradation of the probe is installed in the host computer C, but can be stored in the control section 5 of the system main body 100 for the system main body 100 to make determinations as to whether or not a given probe is normal and as to a symptom of degradation of the probe, and only the determination result can be sent to the host computer C and stored in the data storage section M, thereby eliminating the need for the storage section for storing the probe diagnosis result data in the system main body 100.

(4) Management and diagnosis of the components making up the system main body:

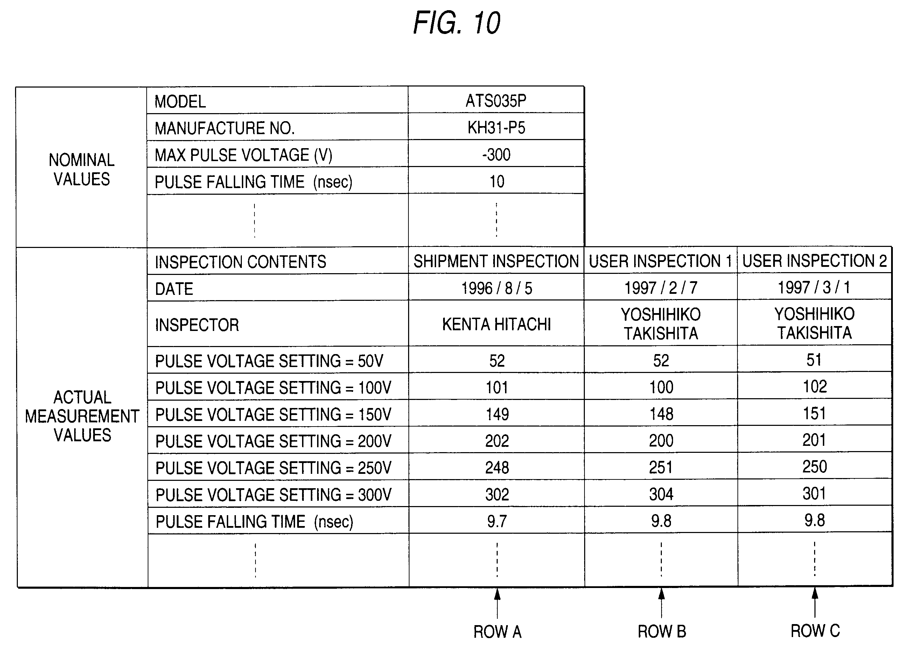

In (3), probe management and diagnosis have been discussed. In the embodiment, the components making up the system main body 100, such as the components of the ultrasonic transmission/reception circuit 2 and the waveform processing circuit 3, as well as the probes are managed and diagnosed. The management and diagnosis of the components will be discussed with reference to FIG. 9 and FIG. 10 by taking a transmission pulse circuit in the ultrasonic transmission/reception circuit 2 as an example. FIG. 9 is a chart to show transmission pulse voltage, wherein the time is entered on the horizontal axis and the voltage is entered on the vertical axis. The transmission pulse circuit is a circuit for transmitting ultrasonics by feeding an impulse signal shown in FIG. 9 into the vibrator in the probe 1. To transmit normal ultrasonics, magnitude of transmission pulse voltage output from the transmission pulse circuit, V, and pulse falling time T shown in FIG. 9 must be output with setup values. Preferably, the user also grasps the characteristics of the transmission pulse circuit like the probe 1 described above. Various data pieces in the transmission pulse circuit will be discussed with reference to FIG. 10.

FIG. 10 is a table to show a data example of the transmission pulse circuit. At the shipment time of each ultrasonic inspection system, its manufacturer writes the data into row A shown in FIG. 10 containing nominal value and actual measurement value columns. The nominal value column contains entries of model, manufacture number, maximum pulse voltage, pulse falling time, etc. The actual measurement value column contains entries of inspection contents, date, inspector, output pulse voltages relative to setup pulse voltages (in the example, setup voltages 50 V, 100 V, 150 V, 200 V, 250 V, and 300 V), pulse falling time, etc.

As with the probes, after shipment of the ultrasonic inspection system, the transmission pulse circuit is inspected as required or periodically by the inspector or each time the above-described self-diagnosis is carried out, and the actual measurement value rows of the data increase accordingly. To use the self-diagnosis function, the impulse signal when the switch device 7 is off becomes a reception signal intact, is read over the signal communication line L2, and is sent to the host computer C, which then stores the signal in the data storage section M. In the example shown in FIG. 10, two inspections are executed and the inspection results are written into rows B and C. Whether or not the transmission pulse circuit is normal is determined based on the digit change. When the user requires the data of the transmission pulse circuit, he or she issues a request for transmitting the data of the transmission pulse circuit to the host computer C via the network bus NB. In response to the request, the host computer C reads the data of the transmission pulse circuit from the data storage section M and transmits the data via the network bus NB to the ultrasonic inspection system making the request.

In the example shown in FIG. 10, the transmission pulse circuit is inspected by the inspectors. However, clearly, automatic measurement is also possible by inserting a measurement program during the self-diagnosis described above in (2). Clearly, like the transmission pulse circuit, other components of the system main body can also be managed and diagnosed based on predetermined data.

In the embodiment, predetermined data of the components of the system main body of each ultrasonic inspection system A1-An is thus stored in the data storage section M, so that the components can be managed and diagnosed based on the stored data.

(1) processing of data collected by the ultrasonic inspection systems A1-An, (2) failure diagnosis of the ultrasonic inspection systems A1-An, (3) probe management and diagnosis, and (4) management and diagnosis of the components making up the system main body in the embodiment have been discussed. The description made so far is mainly applied to the installation-type ultrasonic inspection systems. However, the embodiment is not limited to the installation-type ultrasonic inspection systems; the interface 6, the switching device 7, and the signal communication lines L1-L5 are added to a conventional portable ultrasonic inspection system, whereby the functions in (1) to (3) described above can be carried out as with the installation-type ultrasonic inspection system. In this case, the portable ultrasonic inspection system may have the interface connected to the network bus only when necessary. Further, in the description of the embodiment, a large number of ultrasonic inspection systems exist, but the embodiment can be applied even when only one ultrasonic inspection system exists, needless to say.

In the embodiment, the host computer C comprising the self-diagnosis program carries out failure diagnosis of each ultrasonic inspection system A1-An via the network bus. An example of carrying out failure diagnosis of a ultrasonic inspection system without using the host computer C or the network bus will be discussed below:

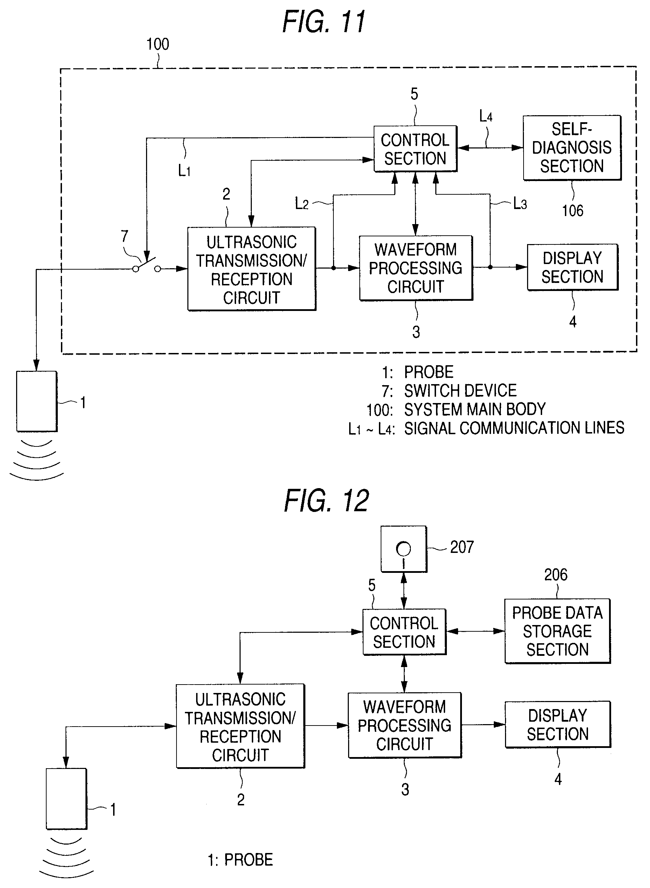

FIG. 11 is a block diagram of a ultrasonic inspection system containing diagnosis means according to a second embodiment of the invention. Parts identical with or equivalent to those previously described with reference to FIG. 3 are denoted by the same reference numerals in FIG. 11 and will not be discussed again.

In the second embodiment, a self-diagnosis section 106 is provided in place of the interface 6 in FIG. 3 and a program required for transferring data to diagnose the self-diagnosis section 106 is added to an operation program of a control section 5.

Next, the embodiment will be discussed with reference to the flowcharts shown in FIG. 4 and FIG. 5. In the embodiment, diagnosis is carried out in a system main unit 100. For this purpose, the self-diagnosis section 106 is provided with the self-diagnosis program shown in the flowcharts of FIG. 4 and FIG. 5. In the embodiment, the ultrasonic inspection system can be diagnosed not only at the trouble occurrence time in the ultrasonic inspection system, but also periodically.

The self-diagnosis section 106 waits for reception of a self-diagnosis request at step S1 shown in FIG. 4. That is, if a self-diagnosis is required for a reason such that the ultrasonic inspection system arrives at a predetermined periodic diagnosis time or that trouble occurs in any ultrasonic inspection system, the user of the ultrasonic inspection system selects SELF-DIAGNOSIS out of a menu displayed on the system main body 100. This selection is transmitted as a self-diagnosis request through the control section 5 to the self-diagnosis section 106, which then starts the diagnosis operation in response to the request. First, the self-diagnosis section 106 issues an instruction for moving the probe of the ultrasonic inspection system to an inspection (test) position at step S2 and waits until the probe is moved to the position at step S3. In response to the instruction, the control section 5 actuates the drive mechanism of a probe 1 for moving the probe 1 to a predetermined position. For example, if the ultrasonic inspection system enters a specimen in a water tank for inspection, the surface of a flat portion of the water tank is assumed to be a specimen (tested object) and a position a predetermined distance from the surface is adopted as the predetermined position. When the probe 1 has been moved to the position, the control section 5 transmits a move termination signal to the self-diagnosis section 106.

When the self-diagnosis section 106 acknowledges the move termination signal, it issues an instruction for turning on a switch device 7 at step S4, waits until the switch device 7 is turned on at step S5, issues an instruction for transferring inspection signal and collecting inspection data at step S6, and waits until data is collected at step S7. The control section 5 closes the switch device 7 via a signal communication line L1 and transmits signal to a ultrasonic transmission/reception circuit 2 with the switch device 7 closed. The ultrasonic transmission/reception circuit 2 causes ultrasonics to be generated from the probe 1, receives the reflected wave from the flat portion of the water tank, and outputs a signal responsive to the reflected wave. A waveform processing circuit 3 processes the signal from the ultrasonic transmission/reception circuit 2 and outputs a signal responsive to the processed signal. The control section 5 collects the signals output from the ultrasonic transmission/reception circuit 2 and the waveform processing circuit 3 via signal communication lines L1-L5 and at the termination of the collection, transmits a collection termination signal to the self-diagnosis section 106.

Upon reception of the collection termination signal, the self-diagnosis section 106 instructs the control section 5 to turn off the switch device 7 at step S8 and waits until the switch device 7 is turned off at step S9. When the control section 5 turns off the switch device 7 over the signal communication line L1 and informs the self-diagnosis section 106 that the switch 7 is turned off, the self-diagnosis section 106 acknowledges the information and again issues an instruction for transferring inspection signal and collecting inspection data at step S10 and waits until data is collected at step S11. The control section 5 transmits signal to the ultrasonic transmission/reception circuit 2 with the switch device 7 off. In this case, the switch device 7 is off and the probe 1 is not connected to the system main body 100, thus the transmission pulse to the ultrasonic transmission/reception circuit 2 is used as a reception signal. However, alternatively, a separate reference signal generation circuit may be provided so that an output signal thereof is used as a reception signal. In the state, the control section 5 collects the signals output from the ultrasonic transmission/reception circuit 2 and the waveform processing circuit 3 via the signal communication lines L2 and L3 and terminates the collection. The self-diagnosis section 106 issues an instruction for transferring the collected data to the self-diagnosis section 106 at step S12 and waits for data transfer at step S13. Upon completion of data transfer via the signal communication line L4 from the control section 5, the self-diagnosis section 106 stores the received data in a data storage section (not shown) in the self-diagnosis section 106 at step S14.

Next, the self-diagnosis section 106 carries out diagnosis based on the collected data. First, the self-diagnosis section 106 reads the output data of the ultrasonic transmission/reception circuit 2 with the switch device 7 on (the probe 1 connected to the system main body) from the data storage section and determines whether or not the data is valid at step S15 shown in FIG. 5 by comparing the data with the known output signal of the ultrasonic transmission/reception circuit 2 when the ultrasonic reflected wave from the flat portion of the water tank was received.

If the data is valid, then the self-diagnosis section 106 reads the output data of the waveform processing circuit 3 with the switch device 7 on (the probe 1 connected to the system main body) from the data storage section and determines whether or not the data is valid at step S16 by comparing the data with a known valid waveform circuit output signal. If the data is valid, the self-diagnosis section 106 instructs the control section 5 to display a "NO ERROR" message on a display section 4 at step S17. If the self-diagnosis section 106 determines at step S16 that the data is not valid, it instructs the control section 5 to display a message of "WAVEFORM PROCESSING CIRCUIT 3 15 ERRONEOUS" on the display section 4 at step S18.

If the self-diagnosis section 106 determines at step S15 that the data is not valid, it reads the output data of the ultrasonic transmission/reception circuit 2 when the switch device 7 was turned off from the data storage section and determines whether or not the data is valid at step S19 by comparing the data with a known output signal from the ultrasonic transmission/reception circuit 2 when the ultrasonic transmission/reception circuit 2 received a transmission pulse. If the data is valid, the self-diagnosis section 106 instructs the control section 5 to display a message of "PROBE 1 IS ERRONEOUS" on the display section 4 at step S20. If the self-diagnosis section 106 determines at step S19 that the data is not valid, it instructs the control section 5 to display a message of "ULTRASONIC TRANSMISSION/RECEPTION CIRCUIT 2 IS ERRONEOUS" on the display section 4 at step S21. The diagnosis of the trouble in the ultrasonic inspection system making the diagnosis request is now complete.

In the description of the operation, the switch device 7 is provided for selectively placing the probe 1 in a connection or non-connection state. However, the switch device 7 is not necessarily required and the user may attach or detach the probe 1 to or from the system main body 100. In this case, the self-diagnosis section 106 instructs the control section 5 to display a message on the display section 4, requesting the user to attach the probe 1 in place of displaying the message at step S4 and instructs the control section 5 to display a message on the display section 4, requesting the user to detach the probe 1 in place of displaying the message at step S8.

In the embodiment, the self-diagnosis section 106 collects the output signals of the ultrasonic transmission/reception circuit 2 and the waveform processing circuit 3 with the probe 1 transferring ultrasonics and those with the probe 1 not involved, and diagnoses trouble of the ultrasonic inspection system based on the output signals. Thus, the trouble point can be located, whereby a maintenance person for attaching and detaching the probe for diagnosis at the trouble time and system user labor and time can be decreased. If the message "PROBE IS ERRONEOUS" is displayed, a spare probe may be provided, thus it is not necessary to provide a spare probe considering diagnosis. Further, if the message "ULTRASONIC TRANSMISSION/RECEPTION CIRCUIT IS ERRONEOUS" or "WAVEFORM PROCESSING CIRCUIT IS ERRONEOUS" is displayed, the user informs the maintenance department of the system main body that the message is displayed and requests the department to repair it. Thus, the time to recovery of the faulty ultrasonic inspection system can be shortened.

Diagnosis is carried out automatically and little requires labor, thus can be carried out frequently or periodically. The reliability of the system, in turn, the reliability of the inspection result can be improved by executing diagnosis.

In the description of the embodiment, both the ultrasonic transmission/reception circuit and the waveform processing circuit are diagnosed. However, if it is sufficient to determine whether trouble is contained in the probe or the system main body, only output data of either of the ultrasonic transmission/reception circuit and the waveform processing circuit may be collected for diagnosis.

In the embodiment, the portions common to the conventional system main body 10 are simplified as the ultrasonic transmission/reception circuit 2, the waveform processing circuit 3, the display section 4, and the control section 5, and the signals read into the control section 5 are described as L2 and L3. In fact, often the machine configuration is furthermore divided as shown in the conventional system. Then, for example, the ultrasonic transmission/reception circuit is divided into a transmission circuit (pulser circuit) and a reception circuit (receiver circuit), the waveform processing circuit is divided into a gate circuit and an A/D conversion circuit, and four outputs of the circuits are read into the control section, whereby faulty points of the system main body can be further narrowed down in diagnosis.

Next, an ultrasonic inspection system comprising a ultrasonic probe data management function according to a third embodiment of the invention will be discussed. Since the ultrasonic inspection system contains the ultrasonic probe data management function in the third embodiment, it is not necessary to use the host computer C or the data storage section M through the network bus described above.

FIG. 12 is a block diagram of the ultrasonic inspection system comprising the ultrasonic probe data management function according to the third embodiment of the invention. Parts identical with or equivalent to those previously described with reference to FIG. 1 are denoted by the same reference numerals in FIG. 12 and will not be discussed again. The configuration shown in FIG. 12 differs from that shown in FIG. 11 in that a probe data storage section 206 and a data storage medium 207 are added. The data storage medium 207 is an external storage medium that can be written and read by a control section 5 and a floppy disk, a magneto-optic disk, an IC card (PC card), etc., can be used as the data storage medium.

The data storage media 207 are provided in a one-to-one correspondence with probes. When a probe is shipped, the probe and the data storage medium 207 corresponding thereto are shipped in a pair. Normally, the model and the manufacture number are printed on the probe surface by inscription, etc., thus they are also described on the surface of the data storage medium 207 for relating the probe and the data storage medium 207 to each other.

FIG. 6 is a table to show a data format example of the data storage medium, as previously described in the first embodiment. That is, the data is stored in a spreadsheet format used with PC software. At the shipment time of each probe, the data is written into row A shown in FIG. 6 containing nominal value and actual measurement value columns. The nominal value column contains entries of vibrator diameter, center frequency, focal distance, etc., of the specifications required for ordering the probe including the model and the manufacture number.

In the example shown in FIG. 6, beam diameter is entered in addition to the entries. For a probe of vertical focus type used with a water immersion method, the half-breadth beam diameter (theoretical value) is found as follows:

$$d = 0.71 \; \lambda F/R \; \text{(d: Beam diameter, } \lambda \text{: Wavelength, F: Focal distance, R: Vibrator radius)}$$

Since this value is used as reference to determine which probe is to be used with respect to the target defect size, the user should have the value as a reference value although data documents presented by the manufacturer scarcely describe the value.

The actual measurement value column stores shipment inspection data and contains entries of center frequency, upper limit frequency, lower limit frequency, band width, focal distance, sensitivity, electrostatic capacity, etc., including the date and the inspector. The pulse width and beam diameter used as resolution index of the probe are also described. After the probe shipment, the actual measurement value rows of the data increase each time the user or the manufacturer re-inspects the probe as required. The probe is re-inspected periodically or after specimen measurement, but the re-inspection time is not defined. In the example shown in FIG. 6, the user executes two inspections and the inspection results are written into rows B and C. In the inspection example, the probe is re-inspected for pulse width and sensitivity and it is understood from the digit change that the probe is damaged gradually. The entries of the nominal value and actual measurement value columns shown in FIG. 6 are applied to the probe of vertical focus type used with the water immersion method; they vary depending on the probe type.

For example, for a bevel probe, a refraction angle entry is included; for an array probe, entries of the number of channels, channel-to-channel phase difference, etc., are included.

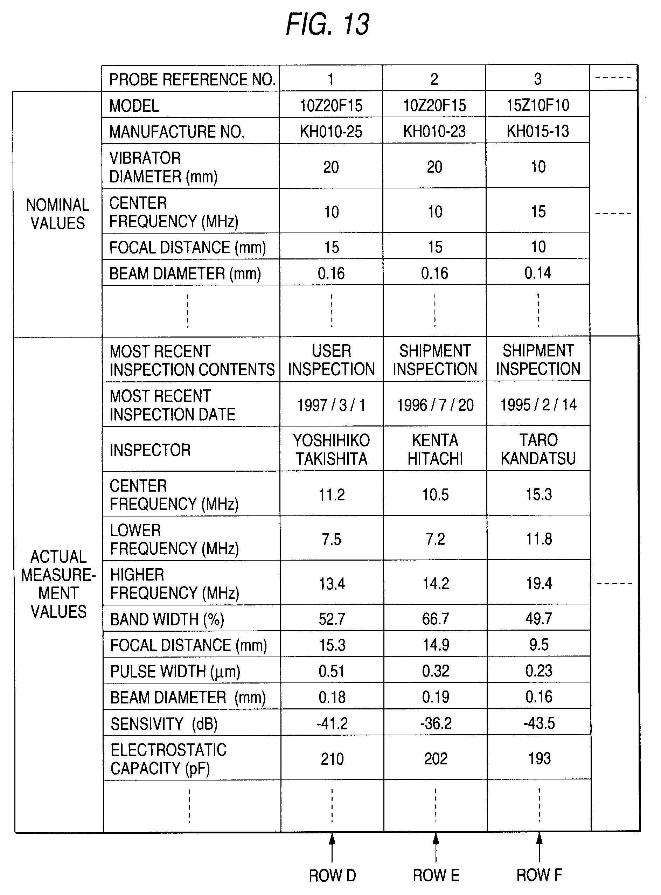

Next, how to use the system shown in FIG. 12 will be discussed with reference to a display example shown in FIG. 13.

1. To register a new probe:
    The data storage medium 207 corresponding to the probe to be registered is set in a control section 5 and the probe data written on the data storage medium 207 is transferred to the probe data storage section 206. If the data of another probe is written in the probe data storage section 206, the data of the new probe is added.

2. To select a probe for ultrasonic inspection:

    1) The data written in the probe data storage section 206 is displayed on a display section 4 as required. A display example is shown in FIG. 13, wherein rows D, E, and F show data of different probes and the data corresponding to row A shown in FIG. 6 is displayed.
        The probe in row D shown in FIG. 13 (probe number 1) corresponds to the probe in row A shown in FIG. 6. As seen from "USER INSPECTION 2" in entry "MOST RECENT INSPECTION CONTENTS," two user inspections are executed and the most recent data is read and displayed for re-inspection items "PULSE WIDTH" and "SENSITIVITY." The data in rows E and F is inspection data at the shipment time and the probes in rows E and F are not re-inspected.
    2) An optimum probe for the inspection to be executed is selected from among the probes involving the displayed data as shown in FIG. 13:
        Since FIG. 13 is provided in the spreadsheet format, processing functions such as data retrieval and data sort can be used, enabling the user to easily select the optimum probe.

3. To re-inspect a probe:

    1) The probe to be re-inspected is connected to a system main body and the data storage medium 207 corresponding to the probe is set in the control section 5.
    2) A probe inspection program of the control section 5 is operated.
    3) The probe data updated by re-inspecting the probe is written into the probe data storage section 206 and the data storage medium 207.

To write the probe data, the data before the probe is re-inspected may be replaced with the updated probe data or the old data may be recorded along with the updated probe data, as shown in FIG. 6.

As an example of the re-inspection, the frequencies are re-inspected by emitting ultrasonics to a flat steel sheet, etc., used as the reference and obtaining a reflected wave or performing an empty shot and inputting an oscillation wave, then executing FFT (fast Fourier transform) analysis for providing the center, upper limit, and lower limit frequencies. The pulse width is re-inspected by converting an obtained analog waveform into digital form. The sensitivity is re-inspected by emitting ultrasonics to a reference object, obtaining its reflected wave, and finding a ratio between the pulse amplitude and the reflected wave amplitude.

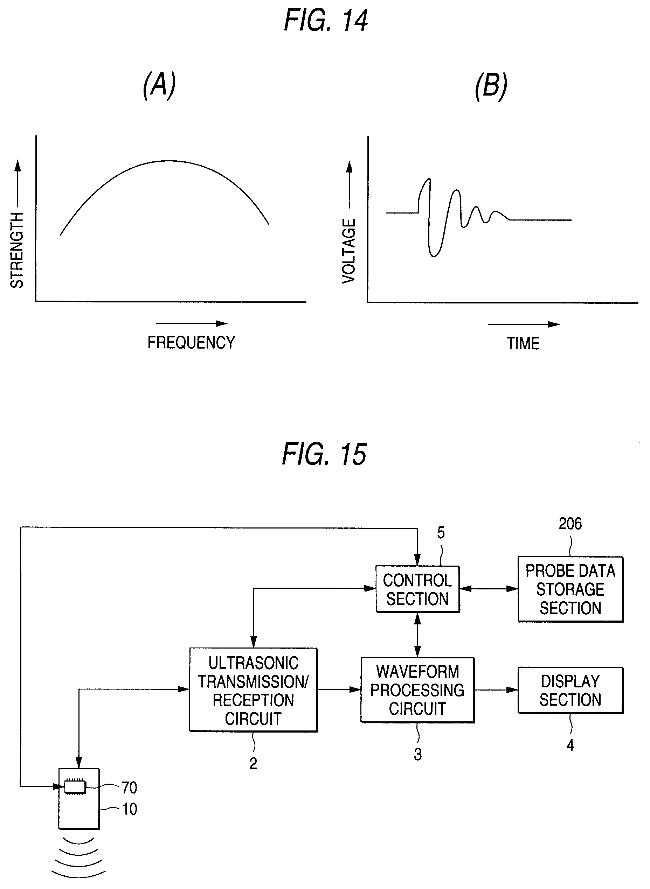

When they are re-inspected, the waveform subjected to A/D conversion and the FFT result may be stored and managed as probe data and the probe data may be displayed as a graph on the display section 4 as required. FIGs. 14A and 14B show waveform examples of the probe data. FIG. 14A is a chart to show the FFT result waveform, wherein frequency is entered on the horizontal axis and reflected wave strength is entered on the vertical axis. FIG. 14B is a chart to show the waveform of the reflected wave, wherein time is entered on the horizontal axis and voltage is entered on the vertical axis. Such waveforms are stored and managed as probe data and are displayed on the display section 4 as required.

If two or more systems shown in FIG. 12 exist, the data of all probes is not necessarily stored in the probe data storage sections 206 of all systems. Therefore, as seen from the steps 1 to 3 described above, it is the data storage medium 207 that holds the most recent inspection data reliably. Therefore, it is desirable to always carry (manage) the probe and its corresponding data storage medium 207 in a pair. If only one system exists, the data of all probes is stored in the probe data storage section 206, thus the data storage medium 207 need not be used.

In the embodiment, the data storage media for storing the characteristic data of probes are provided in a one-to-one correspondence with the probes and when a probe is re-inspected, it is automatically re-inspected according to the program contained in the system, the inspection result is stored on the corresponding data storage medium, and the data stored on the data storage medium is stored in the probe data storage section and is displayed on the display section. Thus, the accurate specification values of the held probes can be easily obtained, so that a proper probe can be selected for executing highly accurate inspection. Probe failure, breakage, and replacement time are not overlooked owing to the probe re-inspection data. Resultantly, an inspection result error can be prevented.

Further, since probes can also be re-inspected automatically, the load can be taken off the inspector.

FIG. 15 is a block diagram of a ultrasonic inspection system comprising a ultrasonic probe data management function according to a fourth embodiment of the invention. Parts identical with or equivalent to those previously described with reference to FIG. 12 are denoted by the same reference numerals in FIG. 15 and will not be discussed again. The configuration shown in FIG. 15 differs from that shown in FIG. 12 in that a probe 10 contains a data storage device 70, which is connected to a control section 5. That is, the data storage medium 207 is used in the embodiment shown in FIG. 12, but the data storage device 70 is used in the fourth embodiment in place of the data storage medium 207.

Since the probe contains the storage device for storing the characteristic data of the probe in the embodiment, the same effect as that of the third embodiment is produced and the need for managing or carrying the data storage medium apart from the probe as in the third embodiment is eliminated; an easy-to-use system is provided and it is not feared that the data storage medium may be lost.

INDUSTRIAL APPLICABILITY

As described above, in the invention, the ultrasonic inspection systems are connected to the host computer by the transmission line and the data storage section is connected to the host computer. The data provided by the ultrasonic inspection systems is collected by the host computer and is stored in the data storage section. Based on the stored data, specimen inspection data is analyzed and determined, the result is stored, whether or not an abnormality at a specific point exists is determined, the determination result is stored, and a symptom of degradation of each probe is grasped or the probes are managed or the components of the system main body are managed and diagnosed. Thus, the following effects capable of drastically decreasing the load on and cost of the ultrasonic inspection system can produced:

(1) Since the specimen inspection data is analyzed and determined, the mechanisms of the control section, etc., of each ultrasonic inspection system can be simplified for decreasing the cost of the ultrasonic inspection system. The labor and time required for changing or revising in each ultrasonic inspection system can be decreased drastically and the labor, time, and cost required for managing the data, etc., in the ultrasonic inspection system can be eliminated. If only the analysis and determination result data is sent to the host computer, the labor, time, and cost required for managing the data, etc., in the ultrasonic inspection system can also be eliminated.

(2) The host computer determines whether or not an abnormality at a specific point exists, whereby the maintenance person can locate the failure point without going to the installation place of the ultrasonic inspection system, so that the time to recovery of the faulty ultrasonic inspection system can be shortened drastically, the maintenance person labor and time can be decreased, and the labor and time involved in the diagnosis in the user can be saved. Diagnosis can be carried out frequently. The reliability of the system, in turn, the reliability of the inspection result can be improved by executing diagnosis. If only the failure determination result data is sent to the host computer, the maintenance person labor and time can also be reduced and the time to recovery from the failure can be shortened drastically.

(3) The host computer or the system main body keeps track of a symptom of probe degradation, whereby if a symptom of probe degradation is known, a probe to replace is purchased, self-diagnosis intervals are shortened for caution, or any other measure can be taken; even when probe degradation develops and the probe becomes unable to be used, the user can deal with the problem promptly. Since the host computer manages the probes, the most recent data of the probes can be provided and an optimum probe for inspection of a specimen can be selected in a short time, whereby the inspection efficiency can be improved. Further, the host computer manages predetermined data of the components of the system main body, thus the data is managed easily and diagnosis of the components as function degradation, etc., can be carried out easily.

As described above, in the invention, the output data of at least either of the ultrasonic transmission/reception circuit and the waveform processing circuit when the probe is connected and the output data of at least either of the ultrasonic transmission/reception circuit and the waveform processing circuit when the probe is not connected are collected, and the ultrasonic inspection system is diagnosed based on the output data. Thus, the trouble point can be located, whereby a maintenance person for attaching and detaching the probe for diagnosis at the trouble time and system user labor and time can be decreased, it is not necessary to provide a spare probe considering diagnosis, and the time to recovery of the faulty ultrasonic inspection system can also be shortened. Since diagnosis is carried out automatically and little requires labor, it can be carried out frequently or periodically. The reliability of the system, in turn, the reliability of the inspection result can be improved by executing diagnosis.

As described above, in the invention, the external storage media for storing the characteristic data of probes are provided in a one-to-one correspondence with the probes, thus the accurate specification values of the held probes can be easily obtained, so that a proper probe can be selected for executing highly accurate inspection. When a probe is re-inspected, it is re-inspected automatically according to the program contained in the system and the inspection result is stored on the data storage medium. Thus, the re-inspection load can be taken off the inspector, and probe failure, breakage, and replacement time are not overlooked owing to the probe re-inspection data. Resultantly, an inspection result error can be prevented. Further, since the probe contains the storage device for storing the characteristic data of the probe, the need for managing or carrying the data storage medium apart from the probe is eliminated; an easy-to-use system is provided and it is not feared that the data storage medium may be lost. Further, one or more ultrasonic inspection systems and the host computer make up the network, thus the host computer can manage the probes of the ultrasonic inspection systems in a unified manner and the load can be drastically taken off the user.

## Claims

1. A ultrasonic inspection system management system comprising one or more ultrasonic inspection systems each consisting of a probe and a system main body, a host computer, a transmission line for connecting said one or more ultrasonic inspection systems and said host computer, and a data storage section, characterized in that said host computer comprises data collection means for collecting data provided by said one or more ultrasonic inspection systems via said transmission line and storing the data in said data storage section.

2. The ultrasonic inspection system management system as claimed in claim 1 wherein the data is specimen inspection data and wherein said host computer further includes determination means for analyzing and determining the specimen inspection data.

3. The ultrasonic inspection system management system as claimed in claim 1 wherein at least one of said ultrasonic inspection systems comprises inspection system determination means for analyzing and determining specimen inspection data and wherein the data collected by said data collection means of said host computer is data of a determination result of said inspection system determination means.

4. The ultrasonic inspection system management system as claimed in claim 1 wherein the data is first test data provided when said probe of a specific one of said ultrasonic inspection systems is connected to said system main body and second test data provided when said probe is disconnected from said system main body and wherein said host computer further includes command signal output means for outputting command signals for obtaining the first test data and the second test data and abnormal point determination means for determining whether or not an abnormal point is contained in said specific ultrasonic inspection system based on the first test data and the second test data.

5. The ultrasonic inspection system management system as claimed in claim 4 wherein said probe is connected to and disconnected from said system main body by a switch device turned on and off as instructed by said host computer.

6. The ultrasonic inspection system management system as claimed in claim 1 wherein at least one of said ultrasonic inspection systems comprises inspection system abnormal point determination means for determining whether or not an abnormal point is contained in said ultrasonic inspection system based on first test data provided when said probe is connected to said system main body and second test data provided when said probe is disconnected from said system main body and wherein the data collected by said data collection means of said host computer is data of a determination result of said inspection system abnormal point determination means.

7. The ultrasonic inspection system management system as claimed in claim 4 wherein said probe is connected to and disconnected from said system main body by turning on and off a switch device.

8. The ultrasonic inspection system management system as claimed in claim 1 wherein the data is reception level data and wherein said host computer further includes reception level comparison means for comparing most recent data of the reception level data or an average of continuous reception level data pieces containing the most recent data with a predetermined reception level setup value.

9. The ultrasonic inspection system management system as claimed in claim 1 wherein the data is reception level data and wherein said host computer further includes change comparison means for comparing a difference or a change ratio between most recent data of the reception level data and its immediately preceding reception level data with a predetermined change setup value.

10. The ultrasonic inspection system management system as claimed in claim 1 wherein the data is reception level data and wherein said host computer further includes reception level comparison means for comparing most recent data of the reception level data or an average of continuous reception level data pieces containing the most recent data with a predetermined reception level setup value and change comparison means for comparing a difference or a change ratio between the most recent data and its immediately preceding reception level data with a predetermined change setup value when said reception level comparison means determines that the most recent data or the average is greater than the reception level setup value.

11. The ultrasonic inspection system management system as claimed in claim 1 wherein at least one of said ultrasonic inspection systems comprises inspection system reception level comparison means for comparing most recent data of reception level data or an average of continuous reception level data pieces containing the most recent data with a predetermined reception level setup value and wherein the data collected by said data collection means of said host computer is data of a comparison result of said inspection system reception level comparison means.

12. The ultrasonic inspection system management system as claimed in claim 1 wherein at least one of said ultrasonic inspection systems comprises inspection system change comparison means for comparing a difference or a change ratio between most recent data of reception level data and its immediately preceding reception level data with a predetermined change setup value and wherein the data collected by said data collection means of said host computer is data of a comparison result of said inspection system change comparison means.

13. The ultrasonic inspection system management system as claimed in claim 1 wherein at least one of said ultrasonic inspection systems comprises inspection system reception level comparison means for comparing most recent data of reception level data or an average of continuous reception level data pieces containing the most recent data with a predetermined reception level setup value and inspection system change comparison means for comparing a difference or a change ratio between the most recent data and its immediately preceding reception level data with a predetermined change setup value when said inspection system reception level comparison means determines that the most recent data or the average is greater than the reception level setup value and wherein the data collected by said data collection means of said host computer is data of comparison results of said inspection system reception level comparison means and said inspection system change comparison means.

14. The ultrasonic inspection system management system as claimed in claim 1 wherein said data comprises probe data reception means for receiving data of said probe of a specific one of said ultrasonic inspection systems.

15. The ultrasonic inspection system management system as claimed in claim 1 wherein the data is predetermined data in components making up said system main body and wherein said host computer further includes component data reception means for receiving the predetermined data of the components.

16. In a ultrasonic inspection system comprising a probe and a system main body comprising a ultrasonic transmission/reception circuit for exciting said probe and receiving a signal therefrom, a waveform processing circuit for processing a signal from said ultrasonic transmission/reception circuit, and a control section for controlling operation of said ultrasonic transmission/reception circuit and said waveform processing circuit, a ultrasonic inspection system diagnosis method comprising the steps of connecting said probe to said ultrasonic transmission/reception circuit, making said probe opposed to a test object, exciting said probe for outputting ultrasonics, collecting at least either of data output from said ultrasonic transmission/reception circuit and data output from said waveform processing circuit based on a reflected wave signal of the ultrasonics, disconnecting said probe from said ultrasonic transmission/reception circuit, collecting at least either of data output from said ultrasonic transmission/reception circuit and data output from said waveform processing circuit when a test signal is fed into said ultrasonic transmission/reception circuit, and diagnosing said ultrasonic inspection system based on the collected data.

17. In a ultrasonic inspection system comprising a probe and a system main body comprising a ultrasonic transmission/reception circuit for exciting said probe and receiving a signal therefrom, a waveform processing circuit for processing a signal from said ultrasonic transmission/reception circuit, and a control section for controlling operation of said ultrasonic transmission/reception circuit and said waveform processing circuit, a ultrasonic inspection system diagnosis system comprising positioning means for making said probe opposed to a test object with said probe connected to said ultrasonic transmission/reception circuit, probe excitation means for exciting said probe with said probe opposed to the test object, first data collection means for collecting at least either of data output from said ultrasonic transmission/reception circuit and data output from said waveform processing circuit when said probe is excited by said probe excitation means, test signal output means for feeding a test signal into said ultrasonic transmission/reception circuit with said probe disconnected from said ultrasonic transmission/reception circuit, second data collection means for collecting at least either of data output from said ultrasonic transmission/reception circuit and data output from said waveform processing circuit when a test signal is output by said test signal output means, and determination means for determining whether or not an abnormality is contained in said ultrasonic inspection system based on the output data collected by said first data collection means and said second data collection means.

18. The ultrasonic inspection system diagnosis system as claimed in claim 17 wherein said probe is connected to and disconnected from said system main body by a switch device.

19. The ultrasonic inspection system diagnosis system as claimed in claim 17 or 18 wherein the test object is a bottom of a water tank where a specimen of said ultrasonic inspection system is placed and wherein said positioning means is means for moving said probe to a predetermined position on the bottom of the water tank.

20. The ultrasonic inspection system diagnosis system as claimed in claim 17, 18, or 19 further including a display section for displaying a determination result of said determination means.

21. A ultrasonic inspection system having a ultrasonic probe data management function for transmitting and receiving ultrasonics with one selected from ultrasonic probes and inspecting a specimen based on a received ultrasonic signal, characterized by an external storage medium for storing general characteristic data of each of the ultrasonic probes.

22. The ultrasonic inspection system having a ultrasonic probe data management function as claimed in claim 21 wherein the general characteristic data of each ultrasonic probe stored on said external storage medium is data at manufacturing time of the ultrasonic probe and data added to the data or updated data each time the ultrasonic probe is inspected.

23. The ultrasonic inspection system having a ultrasonic probe data management function as claimed in claim 21 or 22 comprising ultrasonic probe inspection means for executing inspection for getting predetermined characteristic data of the ultrasonic probe and characteristic data storage means for storing the characteristic data provided by said ultrasonic probe inspection means on said external storage medium.

24. The ultrasonic inspection system having a ultrasonic probe data management function as claimed in claim 21 or 23 comprising a storage section for storing data stored on said external storage medium.

25. The ultrasonic inspection system having a ultrasonic probe data management function as claimed in any of claims 21 to 24 comprising a display section for displaying the data stored on said external storage medium or said storage section.

26. A ultrasonic inspection system having a ultrasonic probe data management function for transmitting and receiving ultrasonics with one selected from ultrasonic probes and inspecting a specimen based on a received ultrasonic signal, characterized in that each of said ultrasonic probes is provided with a storage device for storing general characteristic data of said ultrasonic probe.

27. The ultrasonic inspection system having a ultrasonic probe data management function as claimed in claim 26 wherein the general characteristic data of said ultrasonic probe stored in said storage device is data at manufacturing time of said ultrasonic probe and data added to the data or updated data each time said ultrasonic probe is inspected.

28. The ultrasonic inspection system having a ultrasonic probe data management function as claimed in claim 26 or 27 comprising ultrasonic probe inspection means for executing inspection for getting predetermined characteristic data of said ultrasonic probe and characteristic data read means for storing the characteristic data provided by said ultrasonic probe inspection means in said storage device.

29. The ultrasonic inspection system having a ultrasonic probe data management function as claimed in any of claims 26 to 28 comprising a storage section for storing the data stored in said storage device.

30. The ultrasonic inspection system having a ultrasonic probe data management function as claimed in any of claims 26 to 29 comprising a display section for displaying the data stored in said storage device.

31. A ultrasonic inspection system having a ultrasonic probe data management function for transmitting and receiving ultrasonics with one selected from ultrasonic probes and inspecting a specimen based on a received ultrasonic signal, said system comprising a computer connected to one or more ultrasonic inspection systems by a transmission line, probe data collection means for collecting characteristic data of the ultrasonic probes contained in said computer, and a storage section for storing the characteristic data collected by said probe data collection means.

32. The ultrasonic inspection system having a ultrasonic probe data management function wherein said computer comprises ultrasonic probe inspection means for re-inspecting the ultrasonic probe connected by the transmission line and characteristic data read means for storing the characteristic data provided by said ultrasonic probe inspection means in said storage section via the transmission line.

33. The ultrasonic inspection system having a ultrasonic probe data management function as claimed in claim 31 or 32 further including a display section for displaying the data stored in said storage section.

## FIG. 1

CONTROL SECTION  5

ULTRASONIC TRANSMISSION/ RECEPTION CIRCUIT  2

WAVEFORM PROCESSING CIRCUIT  3

DISPLAY SECTION  4

10

1

## FIG. 2

NB

NETWORK BUS

SYSTEM MAIN BODY  100

SYSTEM MAIN BODY  100

C  HOST COMPUTER

M  DATA STORAGE SECTION

1

1

A1

An

1: PROBE
A1~ An: ULTRASONIC INSPECTION SYSTEMS

18

## FIG. 3

## FIG. 4

START

S1 — SELF-DIAGNOSIS REQUEST RECEIVED?
NO / YES

S2 — SEND INSTRUCTION FOR MOVING PROBE TO INSPECTION POSITION

S3 — END OF MOVE?
NO / YES

S4 — SEND INSTRUCTION FOR TURNING ON SWITCH DEVICE 7

S5 — SWITCH DEVICE TURNED ON?
NO / YES

S6 — SEND INSTRUCTION FOR TRANSFERRING INSPECTION SIGNAL AND COLLECTING DATA

S7 — END OF DATA COLLECTION?
NO / YES

S8 — SEND INSTRUCTION FOR TURNING OFF SWITCH DEVICE 7

S9 — SWITCH DEVICE 7 TURNED OFF?
NO / YES

S10 — SEND INSTRUCTION FOR TRANSFERRING INSPECTION SIGNAL AND COLLECTING DATA

S11 — END OF DATA COLLECTION?
NO / YES

S12 — SEND INSTRUCTION FOR TRANSFERRING DATA

S13 — DATA TRANSFERRED?
NO / YES

S14 — STORE DATA

TO S15

## FIG. 5

S15

S15 — IS OUTPUT OF ULTRASONIC TRANSMISSION/RECEPTION CIRCUIT WITH SWITCH DEVICE 7 ON NORMAL? — NO

YES

S16 — IS OUTPUT OF WAVEFORM PROCESSING CIRCUIT WITH SWITCH DEVICE 7 ON NORMAL? — NO

YES

S19 — IS OUTPUT OF ULTRASONIC TRANSMISSION/RECEPTION CIRCUIT WITH SWITCH DEVICE 7 OFF NORMAL? — NO

YES

S17 — SEND INSTRUCTION FOR DISPLAYING "NO ERROR"

S18 — SEND INSTRUCTION FOR DISPLAYING "WAVEFORM PROCESSING CIRCUIT IS ERRONEOUS"

S20 — SEND INSTRUCTION FOR DISPLAYING "PROBE IS ERRONEOUS"

S21 — SEND INSTRUCTION FOR DISPLAYING "ULTRASONIC TRANSMISSION/ RECEPTION CIRCUIT IS ERRONEOUS"

END

EP 0 945 725 A1

# FIG. 6

| | | | | |
|---|---|---|---|---|
| NOMINAL VALUES | MODEL | 10Z20F15 | | |
| | MANUFACTURE NO. | KH010-25 | | |
| | VIBRATOR DIAMETER (mm) | 20 | | |
| | CENTER FREQUENCY (MHz) | 10 | | |
| | FOCAL DISTANCE (mm) | 15 | | |
| | BEAM DIAMETER (mm) | 0.16 | | |
| | ⋮ | ⋮ | | |
| ACTUAL MEASURE-MENT VALUES | INSPECTION CONTENTS | SHIPMENT INSPECTION | PERIODIC INSPECTION 1 | PERIODIC INSPECTION 2 |
| | DATE | 1996 / 8 / 5 | 1997 / 2 / 7 | 1997 / 3 / 1 |
| | INSPECTOR | KENTA HITACHI | YOSHIHIKO TAKISHITA | YOSHIHIKO TAKISHITA |
| | CENTER FREQUENCY (MHz) | 11.2 | | |
| | LOWER FREQUENCY (MHz) | 7.5 | | |
| | HIGHER FREQUENCY (MHz) | 13.4 | | |
| | BAND WIDTH (%) | 52.7 | | |
| | FOCAL DISTANCE (mm) | 15.3 | | |
| | PULSE WIDTH ($\mu$m) | 0.35 | 0.42 | 0.51 |
| | BEAM DIAMETER (mm) | 0.18 | | |
| | SENSITIVITY (dB) | -34.8 | -37.5 | -41.2 |
| | ELECTROSTATIC CAPACITY (pF) | 210 | | |
| | ⋮ | ⋮ | ⋮ | ⋮ |

ROW A    ROW B    ROW C

## FIG. 7

THE NUMBER OF TIMES OF INSPECTIONS

*FIG. 8*

```
                          ( START )
                              │
                              ▼
            ┌──────────────────────────────────┐
            │ SET THRESHOLD VALUES Vs AND ΔVs   │── S31
            └──────────────────────────────────┘
                              │
              ┌───────────────▼──────────────┐
              │   PROBE CHECK INSTRUCTION     \── S32
         NO   \   OR REQUEST RECEIVED?        /
              └───────────────┬──────────────┘
                             YES
                              ▼
            ┌──────────────────────────────────────┐
            │ READ PRECEDING INSPECTION VALUE VB1   │
            │ AND CURRENT-INSPECTION VALUE VB0      │── S33
            └──────────────────────────────────────┘
                              │
              S34 ┌───────────▼────────┐
                  \     VB0 < Vs        /───────────────────────┐
                  └───────────┬────────┘        YES             │
                              │ NO                               │
              ┌───────────────▼────────────┐  S35               │
              \   | VB0 - VB1 | > ΔVs?      /                    │
         NO   └───────────────┬────────────┘                    │
                             YES                                 │
    ┌────────────┐    ┌──────────────────┐       ┌────────────┐ │
 S36│DISPLAY "PROBE│ S37│DISPLAY "WARNING" │    S38│DISPLAY "PROBE│
    │ IS NORMAL"  │    └──────────────────┘       │ IS ABNORMAL"│
    └──────┬─────┘            │                    └──────┬─────┘
           │                  ▼                           │
           └──────────────►─◄─┴──────────────◄────────────┘
                              │
                              ▼
                         ( END )
```

*FIG. 9*

FIG. 10

| | | SHIPMENT INSPECTION | USER INSPECTION 1 | USER INSPECTION 2 |
|---|---|---|---|---|
| NOMINAL VALUES | MODEL | ATS035P | | |
| | MANUFACTURE NO. | KH31-P5 | | |
| | MAX PULSE VOLTAGE (V) | -300 | | |
| | PULSE FALLING TIME (nsec) | 10 | | |
| | | ⋮ | ⋮ | |
| ACTUAL MEASUREMENT VALUES | INSPECTION CONTENTS | SHIPMENT INSPECTION | USER INSPECTION 1 | USER INSPECTION 2 |
| | DATE | 1996 / 8 / 5 | 1997 / 2 / 7 | 1997 / 3 / 1 |
| | INSPECTOR | KENTA HITACHI | YOSHIHIKO TAKISHITA | YOSHIHIKO TAKISHITA |
| | PULSE VOLTAGE SETTING = 50V | 52 | 52 | 51 |
| | PULSE VOLTAGE SETTING = 100V | 101 | 100 | 102 |
| | PULSE VOLTAGE SETTING = 150V | 149 | 148 | 151 |
| | PULSE VOLTAGE SETTING = 200V | 202 | 200 | 201 |
| | PULSE VOLTAGE SETTING = 250V | 248 | 251 | 250 |
| | PULSE VOLTAGE SETTING = 300V | 302 | 304 | 301 |
| | PULSE FALLING TIME (nsec) | 9.7 | 9.8 | 9.8 |
| | | ⋮ | ⋮ | ⋮ |
| | | ↑ ROW A | ↑ ROW B | ↑ ROW C |

## FIG. 11

1:  PROBE
7:  SWITCH DEVICE
100:  SYSTEM MAIN BODY
L1 ~ L4:  SIGNAL COMMUNICATION LINES

## FIG. 12

1: PROBE

# FIG. 13

| | PROBE REFERENCE NO. | 1 | 2 | 3 | - - - - - |
|---|---|---|---|---|---|
| NOMINAL VALUES | MODEL | 10Z20F15 | 10Z20F15 | 15Z10F10 | |
| | MANUFACTURE NO. | KH010-25 | KH010-23 | KH015-13 | |
| | VIBRATOR DIAMETER (mm) | 20 | 20 | 10 | |
| | CENTER FREQUENCY (MHz) | 10 | 10 | 15 | - - - - - |
| | FOCAL DISTANCE (mm) | 15 | 15 | 10 | |
| | BEAM DIAMETER (mm) | 0.16 | 0.16 | 0.14 | |
| | ⋮ | ⋮ | ⋮ | ⋮ | ⋮ |
| ACTUAL MEASURE-MENT VALUES | MOST RECENT INSPECTION CONTENTS | USER INSPECTION | SHIPMENT INSPECTION | SHIPMENT INSPECTION | |
| | MOST RECENT INSPECTION DATE | 1997 / 3 / 1 | 1996 / 7 / 20 | 1995 / 2 / 14 | |
| | INSPECTOR | YOSHIHIKO TAKISHITA | KENTA HITACHI | TARO KANDATSU | |
| | CENTER FREQUENCY (MHz) | 11.2 | 10.5 | 15.3 | |
| | LOWER FREQUENCY (MHz) | 7.5 | 7.2 | 11.8 | |
| | HIGHER FREQUENCY (MHz) | 13.4 | 14.2 | 19.4 | - - - - - |
| | BAND WIDTH (%) | 52.7 | 66.7 | 49.7 | |
| | FOCAL DISTANCE (mm) | 15.3 | 14.9 | 9.5 | |
| | PULSE WIDTH (μm) | 0.51 | 0.32 | 0.23 | |
| | BEAM DIAMETER (mm) | 0.18 | 0.19 | 0.16 | |
| | SENSIVITY (dB) | -41.2 | -36.2 | -43.5 | |
| | ELECTROSTATIC CAPACITY (pF) | 210 | 202 | 193 | |
| | ⋮ | ⋮ | ⋮ | ⋮ | ⋮ |

ROW D     ROW E     ROW F

FIG. 14

(A)

(B)

FIG. 15

## INTERNATIONAL SEARCH REPORT

| International application No. |
| --- |
| PCT/JP97/04519 |

**A. CLASSIFICATION OF SUBJECT MATTER**

Int. Cl$^6$  G01N29/22

According to International Patent Classification (IPC) or to both national classification and IPC

**B. FIELDS SEARCHED**

Minimum documentation searched (classification system followed by classification symbols)

Int. Cl$^6$  G01N29/00-29/28

Documentation searched other than minimum documentation to the extent that such documents are included in the fields searched

Jitsuyo Shinan Koho        1926 - 1996
Kokai Jitsuyo Shinan Koho   1971 - 1997
Toroku Jitsuyo Shinan Koho  1994 - 1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 6-269452, A (Olympus Optical Co., Ltd.), September 27, 1994 (27. 09. 94), Column 4, lines 13 to 43; column 6, line 32 to column 7, line 8; column 8, lines 27 to 35; Fig. 7 (Family: none) | 1-3, 26-31, 33 |
| A | | 4-15, 21-25, 32 |
| X | JP, 7-103948, A (Krautkramer Branson Inc.), April 21, 1995 (21. 04. 95), Column 5, lines 32 to 37 & CA, 2077246, C & US, 5287291, A & EP, 532448, B & DE, 69219706, E | 1, 2 |
| X | JP, 2-195251, A (Sumitomo Metal Industries, Ltd.), August 1, 1990 (01. 08. 90), Page 2, upper right column, line 14 to lower left column, line 9 (Family: none) | 1, 3 |

| X | Further documents are listed in the continuation of Box C. | | See patent family annex. |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| December 25, 1997 (25. 12. 97) | January 13, 1998 (13. 01. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**INTERNATIONAL SEARCH REPORT**

International application No.

PCT/JP97/04519

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 4-118556, A (Hitachi, Ltd.),<br>April 20, 1992 (20. 04. 92),<br>Page 8, upper left column, lines 1 to 5; Fig. 2<br>(Family: none) | 15 |
| A | JP, 60-29140, A (Toshiba Corp.),<br>February 14, 1985 (14. 02. 85),<br>Page 1, lower left column; Fig. 5 (Family: none) | 19 |
| A<br><br>X | JP, 63-318931, A (Toshiba Corp.),<br>December 27, 1988 (27. 12. 88),<br>Page 2, lower right column, line 13 to page 3,<br>upper left column, line 6; Fig. 1<br>(Family: none) | 14, 15<br><br>21 |
| A | JP, 5-49642, A (Olympus Optical Co., Ltd.),<br>March 2, 1993 (02. 03. 93),<br>Column 1, lines 2 to 17 (Family: none) | 16 - 20 |
| A | JP, CD-ROM of the specification and drawings<br>annexed to the request of Japanese Utility<br>Model Application No. 108405/1991 (Laid-open No.<br>48906/1993), U (Hitachi Mediko Co., Ltd.),<br>June 29, 1993 (29. 06. 93),<br>Column 1 (Family: none) | 16 - 20 |
| A | JP, Microfilm of the specification and drawings<br>annexed to the request of Japanese Utility<br>Model Application No. 8353/1985 (Laid-open No.<br>123981/1986), U (Shimadzu Corp.),<br>August 4, 1986 (04. 08. 86),<br>Page 1, lines 5 to 15 (Family: none) | 16 - 20 |
| A | JP, 58-32161, A (Nippon Steel Corp.),<br>February 25, 1983 (25. 02. 83),<br>Page 1, lower left column, lines 5 to 19<br>(Family: none) | 16 - 20 |
| A | JP, 5-220139, A (Acoustic Imaging Technologies<br>Corp.),<br>August 31, 1993 (31. 08. 93),<br>Column 1, lines 2 to 11; Fig. 3<br>& US, 5205175, A & EP, 451463, B<br>& DE, 69115326, E | 21, 25, 33 |
| X | JP, 2-156938, A (Shimadzu Corp.),<br>June 15, 1990 (15. 06. 90),<br>Page 1, lower left  column, lines 5 to 20;<br>Fig. 1 (Family: none) | 21, 24 |
| X | JP, 7-391, A (Toshiba Corp.),<br>January 6, 1995 (06. 01. 95),<br>Column 7, lines 21 to 40 (Family: none) | 26, 27,<br>29, 30 |

Form PCT/ISA/210 (continuation of second sheet) (July 1992)

**INTERNATIONAL SEARCH REPORT**

International application No.

PCT/JP97/04519

C (Continuation).   DOCUMENTS CONSIDERED TO BE RELEVANT

| Category* | Citation of document, with indication, where appropriate, of the relevant passages | Relevant to claim No. |
|---|---|---|
| X | JP, 7-299065, A (Aroka K.K.),<br>November 14, 1995 (14. 11. 95),<br>Column 1, lines 2 to 15 (Family: none) | 26 |
| X | JP, 3-1847, A (Fujitsu Ltd.),<br>January 8, 1991 (08. 01. 91)(Family: none) | 26 |
| X | JP, 63-154160, A (Hitachi Mediko Co., Ltd.),<br>June 27, 1988 (27. 06. 88)<br>& US, 4811740, A & DE, 3742875, C | 26 |

Form PCT/ISA/210 (continuation of second sheet) (July 1992)

31